# EUROPEAN PATENT APPLICATION

(11) **EP 1 874 033 A2**
(43) Date of publication of application: **02.01.2008**
(21) Application number: 07110863.3
(22) Date of filing: 22.06.2007
(51) Int. Cl.: H04N 1/40

(54) **Digital camera module**

(30) Priority: 26.06.2006 KR 20060057658
(71) Applicant: Samsung Electro-Mechanics Co., Ltd., Suwon-si, Gyunggi-do (KR)
(72) Inventor: Sung, Gee-young c/o Samsung Advanced Institute of Technology, Gyeonggi-do 446-712 (KR); Kim, Sung-su c/o Samsung Advanced Institute of Technology, Gyeonggi-do (KR); Park, Du-sik c/o Samsung Advanced Institute of Technology, Gyeonggi-do (KR); Lee, Ho-young c/o Samsung Advanced Institute of Technology, Gyeonggi-do 446-712 (KR); Kim, Chang-yeong c/o Samsung Advanced Institute of Technology, Gyeonggi-do 446-712 (KR)
(74) Representative: Grünecker, Kinkeldey, Stockmair & Schwanhäusser Anwaltssozietät

(57) **Abstract**

A digital camera module is provided. The digital camera module includes a digital camera module including a plurality of lenses concentrating light reflected from a subject; and a plurality of sub image sensors corresponding to the plurality of lenses, respectively, and generating an electric image signal responsive to the reflected light, wherein each of the plurality of sub image sensors has a color filter having a single color

## Description

### CROSS-REFERENCE TO RELATED APPLICATIONS

This application claims priority from Korean Patent Application No. 10-2006-0057658 filed on June 26, 2006 in the Korean Intellectual Property Office, the disclosure of which is incorporated herein by reference in its entirety.

### BACKGROUND OF THE INVENTION

### 1. Field of the Invention

The present invention relates to a digital camera module having a plurality of lenses, and more particularly, to a digital camera module having a plurality of lenses in a digital camera, which is mounted in a small-sized digital device such as a mobile phone, a personal digital assistant (PDA), an MP3 player, or the like, equipped with a wide dynamic range function for implementing high-sensitivity sensing and low-sensitivity sensing at the same time, by varying transmittances of a color coated on a color filter to create a difference in light quantity while reducing the size of the digital camera.

### 2. Description of the Related Art

Like most digital devices, a digital camera has opened a new world to many people.

As an alternative to a conventional, film-based camera, the digital camera is advantageous in that with simple manipulation, an ordinary user can take photos comparable to those of a professional photographer, and a taken photo can be viewed immediately after capture without development and printing. Moreover, because the digital camera records captured images as digital image files in a memory of the camera, the taken photo with high picture quality can be uploaded as permanent or semi-permanent digital image files to a personal computer (PC), for example, for storage, image processing, and/or printing at any time when necessary.

In addition, digital cameras have been miniaturized and have become more portable, so they can now be embedded in small-sized digital devices, such as mobile phones, personal digital assistants (PDA), and MP3 players. As a result, taking a photo and enjoying the photo has become a part of everyday affairs, and whether or not a digital camera is embedded in a small-sized digital device has become an important factor in buying the digital device.

Recently, digital devices have become more miniaturized and in addition to demanding personalized devices and convenience, consumers have been demanding smaller and slimmer digital device products.

Accordingly, it is apparent that in order to make a small-sized digital device with an embedded digital camera smaller and slimmer, the embedded digital camera should be made smaller and slimmer.

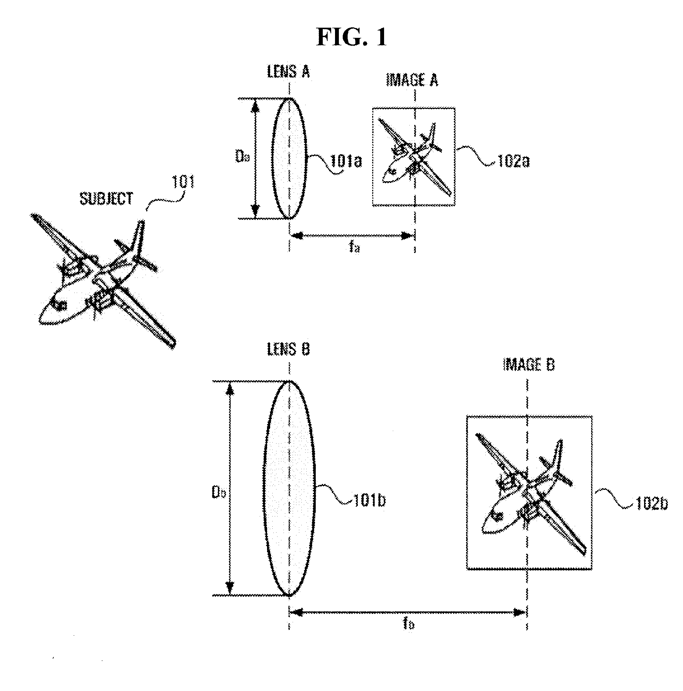

FIG. 1 is a view briefly illustrating an operation principle of a digital camera mounted in a conventional small digital device.

Referring to FIG. 1, images 102a, 102b of a subject 101 photographed by a user through different lenses, that is, a lens A having a diameter Da, labeled 101a, and a lens B having a diameter Db, labeled 101b, are formed on image sensors 102a and 102b, respectively.

Here, for example, in the case of the lens 101 b, the bigger the diameter of a lens becomes, the higher the resolution becomes. However, despite this advantage, the focal length also becomes longer, giving a constraint in miniaturizing the camera module. Accordingly, the increased focal length makes it difficult to attain a miniaturized, slim camera.

Conversely, as in the case of the lens 101 a, if the diameter of a lens is small, the focal length to form an image of an object decreases. Accordingly, while a miniaturized, slim camera module can be attained, it is quite difficult to achieve consumers' demand for an image with a high resolution, which is one of the most important challenges of a digital camera.

Meanwhile, research is actively ongoing regarding technology for implementing a wide dynamic range (WDR) processed image.

WDR processing, which is an advanced technology compared to ordinary back light compensation, enables an image just like the image perceived by the human eye to be obtained even when a photo is taken either at a bright place or a dark place.

To perform the WDR processing, there have conventionally been proposed various approaches for separately implementing a low-sensitivity image sensing area and a high-sensitivity image sensing area in an image sensor to adjustably vary sensing areas. However, one problem with the conventionally proposed methods is that structures of the sensing areas are quite complex. Further, new technologies associated with varying of the structures of the sensing areas may be additionally needed.

To address the above-mentioned problems, a variety of attempts for reducing the focal length and achieving images with a high resolution, for example, Korean Patent Laid-Open Application No. 2003-0084343, entitled "Method for Manufacturing CMOS Image Sensor for Obtaining Focal Length", have been proposed. However, no real solution has yet been proposed.

### SUMMARY OF THE INVENTION

Accordingly, it is an aspect of the present invention to provide a miniaturized digital camera module having a built-in digital camera, which can achieve a small-sized digital device by reducing the size of the digital camera mounted in the small-sized digital device.

It is another aspect of the present invention also to provide a digital camera module for implementing high-sensitivity and low-sensitivity image sensing at the same time even without adding new design or processing operations by varying transmittances of a color coated on a color filter to create a difference in the light quantity.

The present invention also provides a digital camera module having a built-in digital camera, in which a greater number of options are available when designing a small-size digital device in which the digital camera is mounted.

Additional aspects and/or advantages of the invention will be set forth in part in the description which follows and, in part, will be apparent from the description, or may be learned by practice of the invention.

The foregoing and/or other aspects are achieved by providing a digital camera module including a plurality of lenses concentrating light reflected from a subject, and a plurality of sub image sensors corresponding to the plurality of lenses, respectively, and generating an electric image signal responsive to the reflected light, wherein each of the plurality of sub image sensors has a color filter having a single color.

The foregoing and/or other aspects are also achieved by providing a digital camera module including a plurality of color lenses concentrating light reflected from a subject, and a plurality of sub image sensors corresponding to the plurality of lenses, respectively, and generating an electric image signal responsive to the reflected light.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a view briefly illustrating an operation principle of a digital camera mounted in a conventional small digital device;
FIG. 2A is a view illustrating a basic structure of a conventional digital camera;
FIG. 2B is a sectional view of unit pixels used to form an image sensor unit of FIG. 2A;
FIGS. 3A and 3B are diagrams illustrating a structure of a digital camera having a plurality of lenses according to an embodiment of the present invention;
FIG. 3C is a sectional view of unit pixels used to form sub image sensors of FIG. 3A; and
FIGS. 4A and 4B are diagrams illustrating examples of a color filter forming process according to an embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

In general, the performance of a digital camera can be determined by a number of unit pixels because the greater the number of unit pixels, the clearer and cleaner the obtained image.

In addition to the number of unit pixels, a light intensity of a camera lens may also contribute to the performance of a digital camera. The light intensity of the camera lens is called an F number or an iris value.

The F number, which is an expression of a quantity of light per unit area that arrives at an image sensor of the digital camera, is obtained by dividing the diameter D of a lens by the focal length f, i.e., D/f.

The bigger the F number, the lower the quantity of light per unit area that arrives at the image sensor of the digital camera. The smaller the F number, the greater the quantity of light per unit area that arrives at the image sensor, thereby obtaining a bright image with a high resolution.

As described above, the F number is closely related to the resolution of the obtained image as well as the quantity of light per unit area that arrives at the image sensor of the digital camera.

Suppose that two digital cameras having different lens sizes, focal lengths and unit pixels have the same F number. Since the quantities of light per unit area that arrive at the respective image sensors of the two digital cameras are the same, the images obtained from the respective digital cameras will have the same light intensity.

Based on the above principle, the embodiment of the present invention proposes a digital camera module having a plurality of lenses capable of displaying a high pixel image while reducing a lens diameter and a focal length.

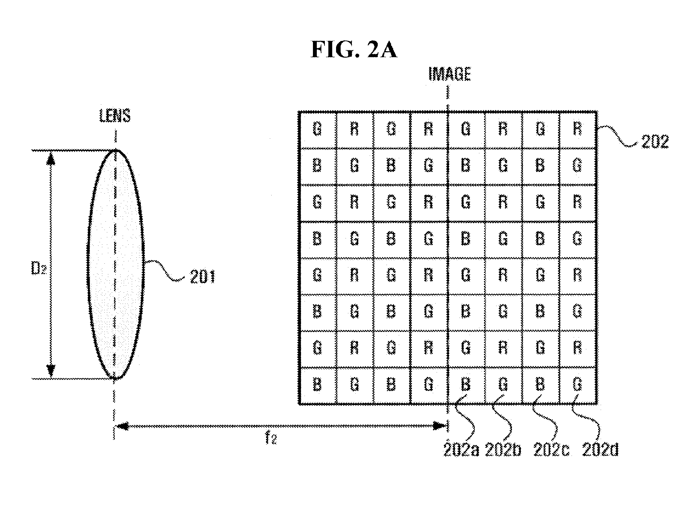

FIG. 2A is a view illustrating a basic structure of a conventional digital camera.

Referring to FIG. 2A, the conventional digital camera basically includes a lens 201 having a diameter D₂ within which light reflected from a subject is concentrated, and an image sensor 202 generating an electric image signal corresponding to pixel levels in response to the light concentrated by the lens 201.

A color filter array known as a Bayer pattern is included in the image sensor 202 to implement light received at the lens 201 as an original full-color image. A top view of the image sensor 202 is shown in FIG. 2A.

The Bayer pattern stems from the principle that a digital image is unavoidably implemented by points even though an image actually existing in the natural world is not constituted by points.

To form a digital image constituted by points, luminance (or brightness) and chrominance (or color) components are collected and points receiving each luminance of red (R), green (G) and blue (B) color components are distributed on a two-dimensional plane.

In the array of the Bayer pattern, G color components, which are the most sensitive to the human eye, are distributed by 50%, and R and B color components are distributed by 25%, respectively, thereby forming a two-dimensional matrix, which is called a Bayer pattern color filter.

The Bayer pattern color filter recognizes only a color component allocated thereto, rather than full-color components, among the respective R, G and B color components forming the matrix, and unrecognized color components are interpolated for reproduction of full-color components.

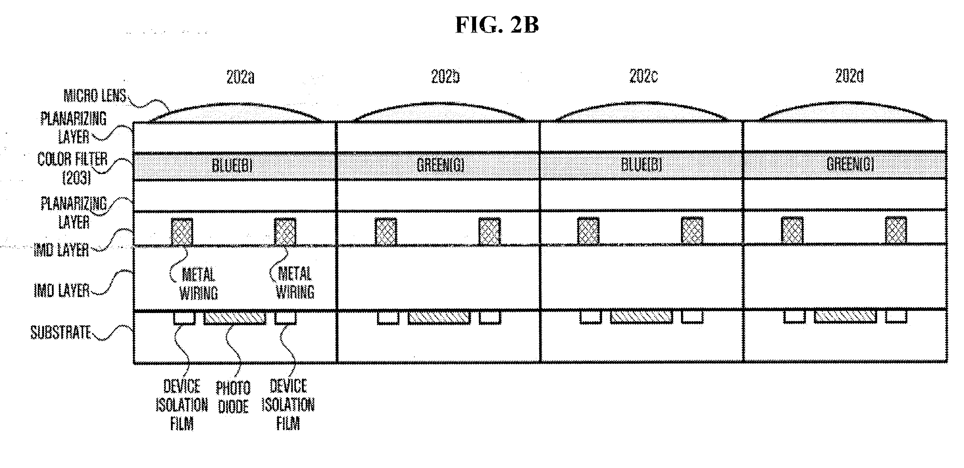

FIG. 2B is a sectional view of unit pixels used to form the image sensor of FIG. 2A.

Referring to FIG. 2B illustrating parts of the unit pixels 202a through 202d to form the image sensor (202 of FIG. 2A), a Bayer pattern color filter 203 is included in the image sensor 202. Features of the sensor 202 are illustrated for context, but not discussed herein.

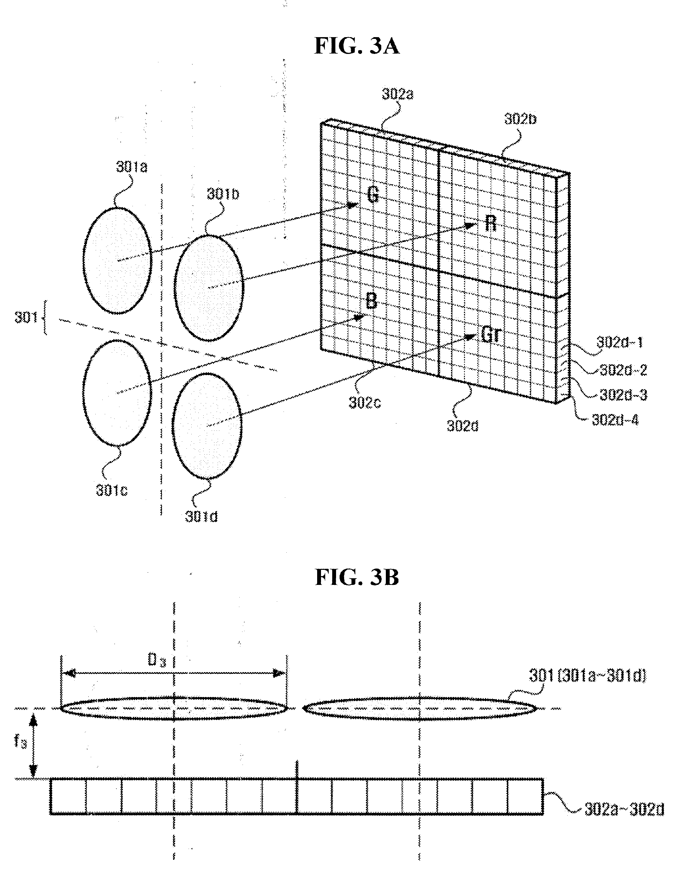

FIGS. 3A and 3B are diagrams illustrating a structure of a digital camera module having a plurality of lenses according to an embodiment of the present invention.

Referring to FIGS. 3A and 3B, the digital camera module includes a plurality of lenses 301 concentrating incident light reflected from a subject, the plurality of lenses 301 having the same diameter, and a plurality of sub image sensors 302a through 302d generating electric image signals in response to the light reflected from the subject. That is, a color filter 303 is included in the plurality of sub image sensors 302a through 302d, the color filter 303 having a space separated into the plurality of color areas to implement the light concentrated through the plurality of lenses 301 as original full colors.

FIG. 3B is a side view of the digital camera module shown in FIG. 3A, in which assumptions are made that focal lengths f₃ ranging from of the plurality of lenses 301 (301a-301 d) having the same diameter D₃ and that sub-image forming sensors 302a-302d are the same.

Accordingly, the plurality of lenses 301 (301a-301d) having the same diameter D₃ are arranged to be co-planar.

With regard to the lens arrangement pattern, while the illustrated embodiment has shown that the plurality of lenses 301 (301 a-301 d) are arranged symmetrically in the up-down direction and left-right direction, the invention is not limited thereto. The plurality of lenses 301 (301a-301d) may be linearly arranged in the horizontal or vertical direction. In a case where an odd number of lenses are available, the lenses may be arranged radially around a center lens and other various lens arrangement patterns may be adopted.

Hereinafter, for convenience of explanation, an embodiment in which four lenses arranged in the form of a 2 × 2 (width × height) matrix will be explained by way of example.

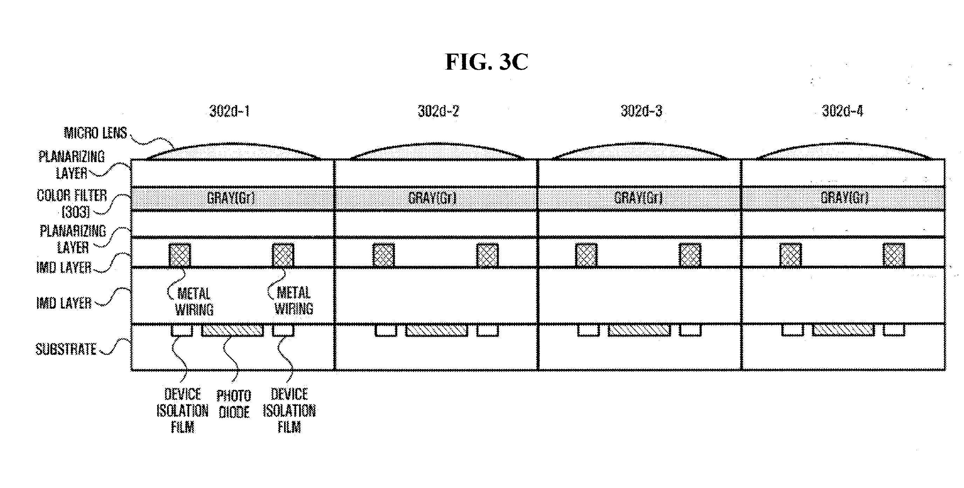

Based on the above-described principle that assuming that two digital cameras having different lens sizes, focal lengths and unit pixels have the same F number, since the quantities of light per unit area that arrive at the respective image sensor units of the two digital cameras are the same, the images obtained from the respective digital cameras will have the same light intensity, in this embodiment, a plurality of lenses 301 (301a-301 d), each being smaller than the lens 201 shown in FIG. 2, and a plurality of sub image sensors 302a through 302d, each having a smaller number of unit pixels than the image sensor unit 202 shown in FIG. 2, are used. In addition, the focal length f₃ of FIG. 3 is shorter than the focal length f₂ of FIG. 2.

Assumptions are made that four million pixels are formed by the image sensor 202 shown in FIG. 2 and that one million pixels are formed by the plurality of sub image sensors 302a through 302d shown in FIG. 3, respectively.

Accordingly, the sub image sensors 302a through 302d shown in FIG. 3 correspond to four image sensors each having one million pixels. Four lenses 301 a-301 d having the same diameter D₃ produce images on the sub image sensors 302a through 302d that correspond to the lenses 301 a-301 d, respectively.

Each of the color filters in the sub image sensors 302a through 302d is quadrisected to make four areas to be suited to the sizes of the sub image sensors 302a through 302d and each area is then coated with a single color.

FIG. 3C is a sectional view of unit pixels 302d-1 through 302d-4 used to form the sub image sensors 302a through 302d of FIG. 3A. Since the unit pixels 302d-1 through 302d-4 exist in a single sub image sensor 302d, the same color filter 303 is included in the areas of the unit pixels 302d-1 through 302d-4.

Here, the color filter 303 is divided into a first filtering area and a second filtering area according to the transmittance of a color coated thereon.

The quantities of light passing through the first and second filtering areas are made different by varying the transmittances of a color coated on the first and second filtering areas, thereby implementing high sensitivity sensing and low sensitivity sensing at the same time.

Among various color filtering areas, a color filtering area having the highest transmittance is grouped into the first filtering area and the other color filtering areas are grouped into the second filtering area.

Hereinafter, for convenience of explanation, an embodiment in which a plurality of color filtering areas and sub image sensors are identified by the same reference numerals will be explained.

For example, among the respective quadrisected color areas forming the color filter included in the sub image sensors 302a through 302d shown in FIG. 3, that is, a green (G) filtering area 302a, a red (R) filtering area 302b, a blue (B) filtering area 302c, and a gray (Gr) filtering area 302d, the gray (Gr) filtering area 302d having the highest transmittance is grouped in second color filtering area, and the other color filtering areas other than the gray (Gr) filtering area 302d, that is, the green (G) filtering area 302a, the red (R) filtering area 302b and the blue (B) filtering area 302c are included in the first filtering area.

In another embodiment, a color filter having a color other than gray may be formed in the second filtering area.

For example, a color filter of any one of white (no color filter), yellow, cyan and magenta may be formed as the second filtering area.

However, the color of a color filter formed in the second filtering area is not limited to these examples and a color filter having any color that has a higher transmittance than those of the color filters formed in the filtering areas of the first filter can be regarded to be included in the scope of the present invention.

As to the transmittance of the color filter shown in FIG. 3A, the transmittance of a gray (Gr) color filter is highest among blue (B), green (G), red (R), and gray (Gr) color filters.

As such, if the transmittance of the color corresponding to the second color filtering area 302d is higher than the transmittance of the color corresponding to the first filtering areas 302a through 302c, the quantities of light passing through the first and second filtering areas become different.

This means that differences occur in the quantities of light arriving at the respective sub image sensors 302a through 302d matched to the respective color filtering areas, and that a high sensitivity sensing function and a low sensitivity sensing function can be implemented at the same time in the respective sub image sensors 302a through 302d.

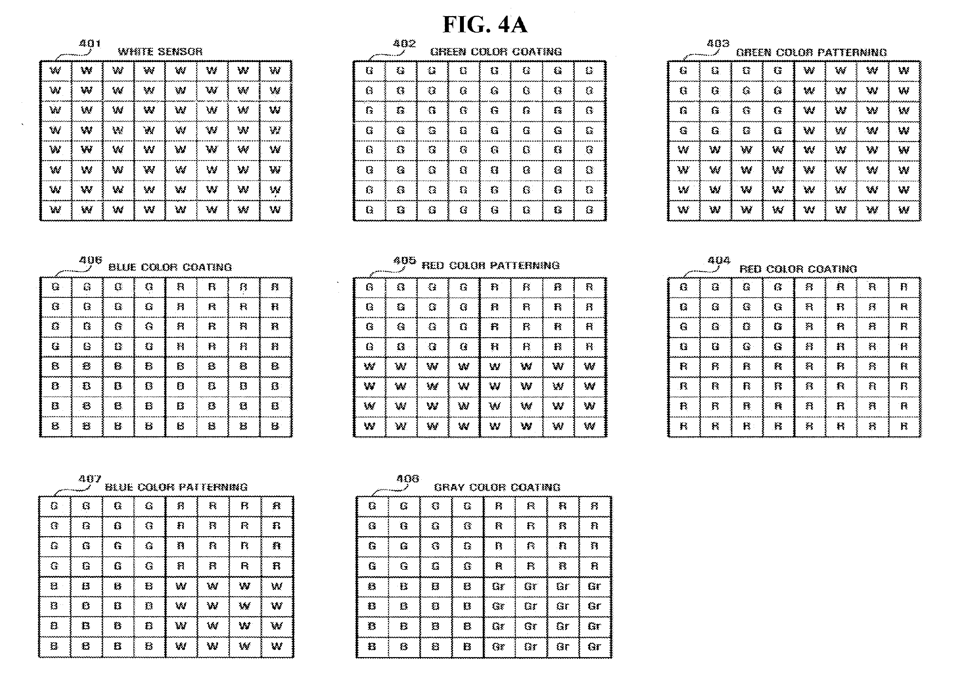

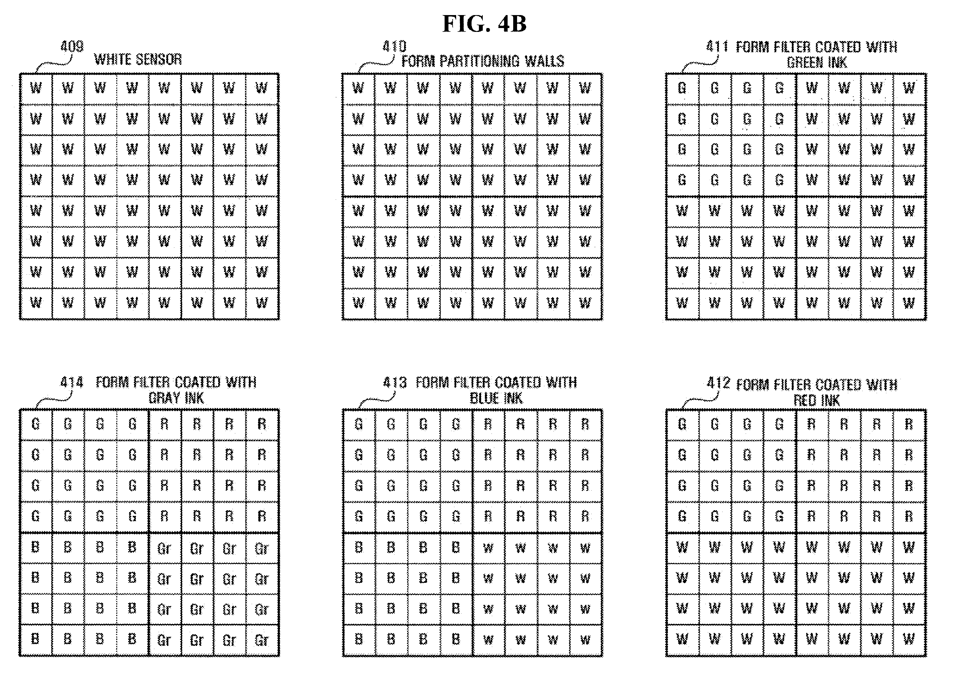

The above-described color filters may be coated by a photo-lithography method and an inkjet method, which are illustrated in FIGS. 4A and 4B, respectively.

In a case of coating each single color of blue (B), green (G), red (R), and gray (Gr), according to the photo-lithography method, an original image sensor without color filter formed (401) is subjected to green color coating (402). Then, an area of the green color coated image sensor, excluding one quarter (1/4) the area of the green color coated image sensor, is subjected to green color patterning (403) with three quarters (3/4) the area of the green color coated image sensor stripped.

The stripped image sensor is subjected to red color coating (404). Then, two quarters (2/4) an area of the red color coated image sensor, excluding one quarter (1/4) the area of the red color coated image sensor, is subjected to red color patterning (405) with a half the area of the red color coated image sensor stripped.

The resultant sub image sensors correspond to image sensors having each one quarter an area of a green and a red color coated image sensor, respectively, with two quarters (2/4) the area of the green color patterned image sensor are subjected to blue color coating and gray color coating (406~ 408).

Compared to the Bayer pattern color filtering process, the photo-lithography method is easy to perform.

FIG. 4B illustrates another example of the color filter forming process according to the present embodiment of the invention, that is, the inkjet method.

The inkjet method begins with a white sensor 409 and as many partitioning walls as lenses, e.g., 4 (four) in the illustrated embodiment, are formed in an image sensor in operation 410. Each quadrisected space is coated with a desired ink to form a predetermined color filter and the same process is repeatedly performed until the color filter forming process is completed in operations 411 through 414.

The inkjet method is quite a simplified process and can advantageously save a quantity of ink used, thereby ultimately reducing the sensor manufacturing cost.

The color filter coated in the above-described manner can provide for a camera module corresponding to the respective lenses and sub image sensors and having a wide dynamic range (WDR) function for implementing high sensitivity sensing and low sensitivity sensing at the same time.

In the digital camera module having a plurality of lenses according to an embodiment of the present invention, a space-separated color filter is not separately provided between each of the plurality of lenses and each of the sub image sensors. Instead, the color-coated plurality of lenses themselves function as color filters. Accordingly, light rays reflected from a subject, which arrive at the respective lenses, form an image on each sub image sensor matching each of the plurality of lenses.

Such a high pixel image processing structure, in which a color-separated image is recovered by using color lenses functioning as color filters without providing separate color filters, comprises a plurality of color lenses of receiving light rays reflected from a subject, and a plurality of sub image sensors for generating an electric image signal responsive to the reflected light rays.

The plurality of color lenses have different colors and different transmittances.

To implement high sensitivity sensing and low sensitivity sensing at the same time, as described above with reference to FIG. 3A, each color lens is divided into a first lens area and a second lens area according to the transmittance of the color coated thereon.

In an embodiment, among the plurality of color lenses, a lens having a color having the highest transmittance is grouped into the second lens area and the other lens areas are grouped into the first lens area, which is substantially the same as the grouping of the color filtering areas in the color filter shown in FIG. 3A.

According to the digital camera module as described above, one or more of the following effects can be obtained.

First, because the size of a digital camera mounted in a small-sized digital device is reduced, the digital device can be further miniaturized.

Next, high sensitivity sensing and low sensitivity sensing can be implemented at the same time without new designs or additional processing operations by creating a difference in the light quantity by using a plurality of color lenses functioning as color filters having different transmittances.

Further, a greater number of options are available when designing a small-sized digital device in which the digital camera is mounted.

While the present invention has been particularly shown and described with reference to exemplary embodiments thereof, it will be understood by those of ordinary skill in the art that various changes in form and details may be made therein without departing from the spirit and scope of the present invention as defined by the following claims. It is therefore desired that the present embodiments be considered in all respects as illustrative and not restrictive, reference being made to the appended claims rather than the foregoing description to indicate the scope of the invention.

## Claims

1. A digital camera module comprising:
a plurality of lenses concentrating light reflected from a subject; and
a plurality of sub image sensors corresponding to the plurality of lenses, respectively, and generating an electric image signal responsive to the reflected light, wherein each of the plurality of sub image sensors has a color filter having a single color.

2. The digital camera module of claim 1, wherein each of the color filters is divided into a first filtering area and a second filtering area according to a transmittance of a color coated thereon.

3. The digital camera module of claim 1, wherein the plurality of sub image sensors have the same number of unit pixels.

4. The digital camera module of claim 1, wherein the color filters each match a corresponding one of the plurality of lenses and each of the plurality of sub image sensors in a one-to-one correspondence.

5. A digital camera module comprising:
a plurality of color lenses concentrating light reflected from a subject; and
a plurality of sub image sensors corresponding to the plurality of lenses, respectively, and generating an electric image signal responsive to the reflected light.

6. The digital camera module of claim 5, wherein each of the plurality of color lenses has a single color.

7. The digital camera module of claim 5, wherein each of the plurality of color lenses has a space-separated area divided into a first lens area and a second lens area according to a transmittance of a color coated thereon, and the transmittance of the lens color of the second lens area is higher than that of the lens color of the first lens area.

8. The digital camera module of claim 5, wherein the sub image sensors match the plurality of lenses in one-to-one correspondence.

9. The digital camera module of claim 7, wherein the second lens area comprises a gray filter.

10. The digital camera module of claim 7, wherein the second lens area comprises a white, yellow, cyan or magenta filter.
